(19) Europäisches Patentamt
European Patent Office
Office européen des brevets

(11) Publication number: **0 298 764 B1**

(12) **EUROPEAN PATENT SPECIFICATION**

(45) Date of publication of patent specification: **22.09.93**

(51) Int. Cl.5: **C08L 77/00**, C08K 5/54

(21) Application number: **88306264.8**

(22) Date of filing: **08.07.88**

(54) **Magnetic polymer compositions.**

(30) Priority: **10.07.87 JP 171097/87**

(43) Date of publication of application:
**11.01.89 Bulletin 89/02**

(45) Publication of the grant of the patent:
**22.09.93 Bulletin 93/38**

(84) Designated Contracting States:
**DE FR GB IT**

(56) References cited:
**EP-A- 0 287 045**
**WO-A-86/03214**
**DE-A- 1 795 686**
**US-A- 4 271 229**

**PATENT ABSTRACTS OF JAPAN, vol. 10, no. 36 (C-328)(2093), 13 February 1986 ; & JP-A-&=188459**

(73) Proprietor: **Bridgestone Corporation**
**1-1, Kyobashi 1-Chome Chuo-Ku**
**Tokyo 104(JP)**

(72) Inventor: **Ishiwaka, Takuki**
**20-22, Kinamimaioka 2-chome Totsuka-ku**
**Yokohama City Kanagawa Prefecture(JP)**
Inventor: **Maruyama, Akihiro**
**1305-7, Nagatsudacho Midori-ku**
**Yokohama City Kanagawa Prefecture(JP)**
Inventor: **Ohta, Hiroshi**
**150-7, Kashiocho Totsuka-ku**
**Yokohama City Kanagawa Prefecture(JP)**
Inventor: **Ohashi, Takashi**
**710-3-403, Kamiyabecho Totsuka-ku**
**Yokohama City Kanagawa Prefecture(JP)**

(74) Representative: **Ouest, Barry et al**
**M'CAW & Co. 41-51 Royal Exchange Cross Street**
**Manchester M2 7BD (GB)**

**EP 0 298 764 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to magnetic polymer compositions which improve the thermal stability of the molded products and make possible their reuse on molding magnetic polymer compositions.

For the magnetic polymer compositions various resins are used as binder thereof. Particularly, polyamide resins are widely used because of their excellent mechanical strength and these substances are relatively inexpensive.

However, the conventional magnetic polymer compositions in which polyamides are used as resinous binder, have had some problems such as:

(1) poor thermal stability, greatly decreased fluidity under high heat load, and inferior molding stability;

(2) no possibility of reusing the molded products manufactured under high heat load.

As described in the above, the conventional magnetic polymer compositions in which polyamide resins are used, have been poor in thermal stability. An object of the present invention is to provide the magnetic polymer compositions having high level of thermal stability.

## SUMMARY OF THE INVENTION

In order to improve the thermal stability the present inventors have made a detailed investigation concerning the phenomena of heat deterioration and from the results such knowledges as follows are obtained:

(1) When the melt viscosity of a conventional magnetic polymer composition is measured at the same temperature from 280 °C to 300 °C as that of injection molding, after 5 to 20 minutes the viscosity thereof suddenly rises and in a extreme case no fluidity is shown.

(2) In the case of a composition made by blending a reused composition which was recovered from molded products, with a virgin composition in a rate of from 10 to 30% by weight, the sudden rise or viscosity at 280 - 300 °C occurs in a shorter period than that shown in the case of a virgin composition (as described above 1), and the more the blending rate of reused composition, the shorter the period for viscosity rice.

(3) When magnetic polymer compositions are prepared by kneading ferrites with a polyamide resin, the higher is the shearing force of kneader, the more the viscosity rise and the shorter the period for the viscosity rise.

According to the knowledge described above, the mechanism of heat deterioration is presumed such that the magnetic polymer compositions melt at the high temperature, and when kneaded by a blade or cylinder the powder of magnetic substance and the polyamide resin are firmly combined to produce micro-gels, which with passing time grow up to be macro-gels and join together in chain or ring forms, and this results in the marked viscosity rise. In the result of earnest research based on the above knowledge and the presumed mechanism, the inventors found that the problems mentioned above can be solved by using a silane coupling agent which has a specific molecular structure, as the surface treating agent to be applied onto magnetic substance powder.

## BRIEF DESCRIPTION OF THE DRAWINGS

Among the attached drawings, both Fig.1 and Fig.2 are the graphs which illustrate the performance of the melted magnetic polymer compositions of the present invention and that of the melted conventional magnetic polymer compositions in their torgue value change with passing time.

## DESCRIPTION OF THE INVENTION

The gist of the present invention lies in that by using a surface treating agent represented by the general formula

$$H_2N\overset{\overset{O}{\|}}{C}NH-C_3H_6-Si-(OC_nH_{2n+1})_3$$

wherein n means integer of 1 to 3, as the surface treating agent, in the range of from 0.1 to 3 parts by weight based on 100 parts by weight of the magnetic substance powder, magnetic polymer compositions with a remarkably improved thermal stability can be obtained.

Besides, if the amount of the used surface treating agent is less than 0.1 parts by weight, the lowering of melt viscosity that is the essential effect of the surface treating agent cannot be recognized, whereas if the amount is more than 3.0 parts by weight, then no improvement of the effect can be expected, and the presence of excess amount of the surface treating agent makes lower in the physical properties such as impact strength and therefore is undesirable.

The adding method of the surface treating agent mentioned above is not particularly restricted, but it is preferred to coat the agent on the magnetic substance powder in advance. The method of application is described below. Said agent as it is or after diluted in a proper diluent is applied through a dropping funnel or sprayer on the magnetic substance powder and mixed by any of known means such as rotating blade mixer, V-blender, or ribbon blender into a uniform mixture. Furthermore, when a diluent is used, it is desired to remove the diluent after the treatment by any proper means such as reduced pressure or heating.

The polyamide resin which is used in the present invention may be any resin which is used as the conventional substance for magnetic polymer compositions, and not particularly limited. Examples of such resin include polyamide 6, 12 which are ring opening polymers of cyclic aliphatic lactams, polyamide 66, 610, 612, MXD6 which are condensation polymers of fatty acids and aliphatic amines, or polyamide 11 which is a condensation polymer of an amino acid, and in addition copolymers, polymer alloys on the like comprising one or more of above substances. Furthermore, polyamides comprised with any other polymers (e.g. polyphenylene oxide and ethylene ethyl acrylate) may also be used. The content of polyamid resin in the composition for magnets is in the range of from 5 to 70% by weight and can be selected in accordance with the properties of the objective magnetic substance powder. Further, it is allowed to use any molding assistance, weathering agent or the like as occasion demands.

For the magnetic substance powder there is no particular limitation as far as it is a material which is ordinarily used in compositions for synthetic resin magnets. Optionally any one of or combined two or more of magnetic materials such as powders of Ba- and Sr- ferrites, rare earth intermetallic compounds, carbonyl iron, and other metals or alloys, soft magnetic ferrites, can be utilized. Furthermore the content of magnetic substance powder in the composition for magnets can be selected in the range of from 30 to 95% by weight in accordance with the properties of magnetic substances of ferrites, rare earth compounds such as samarium-cobalt or neodium-iron.

The magnetic polymer compositions according to the present invention can be molded by various molding methods such as injection, extrusion, or press molding in a heated and melted state. In the process of molding said composition a magnetic field is impressed to magnetize the objective products. The intensity of impressed magnetic field may be sufficient as far as it is at least 3000 Oersteds.

For the evaluation of melt viscosity of the magnetic polymer compositions for polyamide resin magnets an instrument of Laboplastomill 20C200 type made by Toyo Seiki Seisakusho K.K. was used. In the test condition 500 $cm^3$ (about 170g weight) of the objective substance is weighed, and charged in a test chamber of said Laboplastomill which has been heated in advance at 300 °C. By means of a blade of R-60H roller type the changing torque value of the melted substance was measured at 300 °C under the rotation of 50 rpm for 20 minutes. In the said measurement the higher torque value indicates the higher viscosity and the worse fluidity of melted substance.

## Example

Hereinunder, the present invention will be explained more specifically by way of Examples, but the invention is never restricted by these Examples.

## Examples 1 - 3

According to the formulation shown in Table 1, first a definite amount of ferrite magnetic powder (mean particle diameter 1.2$\mu$) is weighed parts by weight and charged in a rotating blade mixer. Into the mixer rotating at the room temperature a definite amount of surface treating agent containing 25% of $\gamma$-ureido-propyltriethoxysilane in isopropyl alcohol is added. After rotating the mixer for 5 minutes the temperature in the mixer is raised up to about 100 °C to remove volatile ingredients such as isopropyl alcohol. The definite amount of polyamide 6 is charged and uniformly mixed again in the rotating blade mixer together with the magnetic substance powder which already has been prepared with the surface treatment. The resulting powder mixture is melted and kneaded by a continuous type uniaxial kneader at 250 °C for 5 minutes,

cooled into solids, then ground and pelletized.

Then, using these pellets the change of torque value was measured by the afore-mentioned Laboplastomill, and the test pieces for the tests of modulus in flexure at 300 °C and Izod impact strength were prepared at 300 °C by injection molding from these pellets. On the other hand, the test pieces for a magnetic property value BHmax were molded by injecting them into a impressed magnetic field of 10,000 Oersteds. The form of test piece is 14mm in diameter and 15mm in thickness.

The method of measurement for Izod impact strength according to JIS K7110 (no notch) is as follows:

Test pieces (no notch) each having the dimension of 8.0cm x 1.0cm x 0.4cm were prepared from the compound pellets made according to the blending ratio shown on Table 1, using injection molding machine having clamping pressure of 50 ton.

After keeping said pieces at 23 °C, 50RH% for 88 hrs, impact strength of each test pieces was quickly determined by using Izod impact strength tester of Toyo Seiki Kabushiki Kaisha in Japan.

The results were shown in Table 1.

The results of various measurements mentioned above are shown in Table 1. Besides, Fig.1 and Fig.2 respectively show the performance in torque value change with passing time of the compounds for resin bonded magnets of Example 2 and Example 3.

Table 1

| | | | Example 1 | Example 2 | Example 3 | Comparative example 1 | Comparative example 2 | Comparative example 3 | Comparative example 4 | Comparative example 5 | Comparative example 6 |
|---|---|---|---|---|---|---|---|---|---|---|---|
| Formulation | Sr-ferrite 1) | | 86.0 | 87.0 | 88.3 | 86.0 | 87.0 | 88.3 | 88.3 | 86.0 | 87.0 |
| | Polyamide 6 2) | | 14.0 | 13.0 | - | 14.0 | 13.0 | - | - | 14.0 | 13.0 |
| | Polyamide 12 3) | | - | - | 11.7 | - | - | 11.7 | 11.7 | - | - |
| | surface treating agent | A 4) | 1.0 | 1.0 | 1.0 | - | - | - | - | - | - |
| | | B 5) | - | - | - | 1.0 | 1.0 | 1.0 | 1.0 | - | - |
| | | C 6) | - | - | - | - | - | - | - | 1.0 | 1.0 |
| Kneading method | | | A | A | A | A | A | A | B | A | A |
| Physical properties | Molding density (g/cm³) | | 3.3 | 3.4 | 3.4 | 3.3 | 3.4 | 3.4 | 3.4 | 3.3 | 3.4 |
| | Modulus in flexture (kg/cm²) 8) | | 184.000 | 191.000 | 153.000 | 181.000 | 193.000 | 138.000 | 14.000 | 186.000 | 187.000 |
| | Impact strength (KJ/m²) 9) | | 42.4 | 39.2 | 30.5 | 27.9 | 27.6 | 22.1 | 24.0 | 33.1 | 32.1 |
| | fluidity | Minimum torque (kg.m) | 0.71 | 0.74 | 1.12 | 0.49 | 0.53 | 0.69 | 1.23 | 0.61 | 0.66 |
| | | Maximum torque (kg.m) | - | - | - | 9.80 | 12.00 | 6.88 | 3.92 | 1.60 | 1.67 |
| | | Maximum torque time (min.) | - | - | - | 19.3 | 19.0 | 15.3 | 17.0 | 20.0 | 20.0 |
| | B · Hmax (MGOe) | | 1.5 | 1.6 | 1.6 | 1.5 | 1.6 | 1.6 | 1.6 | 1.5 | 1.6 |

## Claims

1. Magnetic polymer compositions comprising a magnetic substance powder onto which a surface treating agent was applied and a polyamide resin characterized by using a surface treating agent represented

by the general formula

$$H_2N\overset{\overset{O}{\|}}{C}NH-C_3H_6-Si(OC_nH_{2n+1})_3$$

wherein n means integer of 1 to 3, as the surface treating agent, in the range of from 0.1 to 3 parts by weight based on 100 parts by weight of the magnetic substance powder.

**Patentansprüche**

**1.** Magnetische Polymerzusammensetzungen mit einem magnetische Bestandteile enthaltenden Pulver zur Behandlung mit einem oberflächenaktiven Mittel und einem Polyamidharz, dadurch gekennzeichnet, daß als oberflächenaktives Mittel ein oberflächenaktives Mittel mit der allgemeinen Formel

$$H_2N\overset{\overset{O}{\|}}{C}NH-C_3H_6-Si(OC_nH_{2n+1})_3$$

verwendet wird, wobei n eine ganze Zahl zwischen 1 und 3 ist und der Anteil zwischen 0,1 und 3 Gewichtsteile pro 100 Gewichtsteile des magnetische Bestandteile enthaltenden Pulvers beträgt.

**Revendications**

**1.** Compositions magnétiques de polymères comprenant une poudre d'une substance magnétique sur laquelle on a appliqué un agent de traitement de surface et une résine polyamide caractérisées en ce que l'on utilise un agent de traitement de surface représenté par la formule générale

$$H_2N\overset{\overset{O}{\|}}{C}NH-C_3H_6-Si-(OC_nH_{2n+1})_3$$

dans laquelle n est un nombre entier valant de 1 à 3, en tant qu'agent de traitement de surface, selon une gamme allant de 0,1 à 3 parties en poids pour 100 parties en poids de la poudre de substance magnétique.